# EUROPEAN PATENT APPLICATION

(11) **EP 4 769 794 A1**
(43) Date of publication of application: **01.07.2026**
(21) Application number: 25867231.0
(22) Date of filing: 30.06.2025
(51) Int. Cl.: H01M 50/502, H01M 50/178, H01M 50/569, B23K 26/21

(54) **BUS BAR ASSEMBLY, AND BATTERY MODULE AND BATTERY PACK INCLUDING SAME**

(30) Priority: 30.09.2024 KR 20240132518
(71) Applicant: LG ENERGY SOLUTION, LTD., Seoul 07335 (KR)
(72) Inventor: HONG, Junkee, Daejeon 34122 (KR)
(74) Representative: BCKIP Part mbB
(86) International application number: PCT/KR2025/009179
(87) International publication number: WO 2026/071407

(57) **Abstract**

A busbar assembly may include a frame configured to cover one side or both sides of a battery cell stack, the battery cell stack including battery cells, in which electrode leads of the battery cells are stacked on one side of the frame, and some of the stacked electrode leads are positive electrode leads and others are negative electrode leads.

## Description

### [Technical Field]

The present disclosure relates to a busbar assembly, and a battery module and a battery pack including the same, and more particularly, to a busbar assembly in which an electrical connection structure between battery cells is simplified, and a battery module and a battery pack including the same.

### [Background Art]

Secondary batteries capable of charging and discharging have been widely used as energy sources for wireless mobile devices. In addition, secondary batteries are attracting attention as a power source for electric vehicles (EVs) and hybrid electric vehicles (HEVs).

Small mobile devices use one or two or three battery cells per device. In contrast, for medium- to large-sized devices such as automobiles, due to the need for high output and large capacity, medium- to large-sized battery modules in which a plurality of battery cells are electrically connected are used, and battery packs implemented by connecting a plurality of battery modules are also used.

In order to provide the output and capacity required by a predetermined apparatus or device, a medium-sized or large-sized battery module should have a number of battery cells electrically connected in series, in parallel, or in a combination of series and parallel, and should be able to maintain a stable structure against external forces.

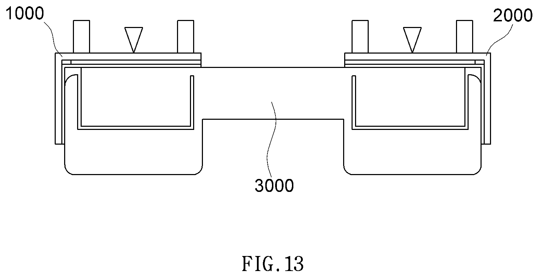

For example, as illustrated in FIG. 13, electrode leads (Al leads and Cu leads) 1000 and 2000 of battery cells in a battery module of the related art may be electrically connected to a plurality of inter-busbars 3000 provided in the form of metal plates by being welded thereto. In particular, the positive electrode lead 1000 and the negative electrode lead 2000 are welded to both sides of the inter-busbar 3000, respectively.

When the electrode leads are connected to both sides of the inter-busbars by welding as in the related art, the structure becomes complicated, it becomes difficult to reduce the weight of the battery module due to the load of the inter-busbars, and there is a limitation in reducing the cost.

### [Disclosure]

### [Technical Problem]

The present disclosure has been made to solve the problems of the related art as described above, and an object thereof is to provide a busbar assembly that can reduce weight and cost while simplifying an electrical connection structure between battery cells, and a battery module and a battery pack including the same.

### [Technical Solution]

To achieve the above object, a busbar assembly according to an embodiment of the present disclosure may include a frame configured to cover one side or both sides of a battery cell stack, the battery cell stack including battery cells, in which electrode leads of the battery cells are stacked on one side of the frame. Some of the stacked electrode leads are positive electrode leads and others are negative electrode leads.

The busbar assembly according to the present disclosure may further include a sensing plate seated on a plate seating portion of the frame, the sensing plate having the electrode leads stacked on a surface of the sensing plate, and joined to the electrode leads.

The sensing plate may sense a voltage when a current flows through the electrode leads joined to the sensing plate.

The sensing plate may include a metal material.

The stacked electrode leads may be joined to each other by laser transmission welding.

The sensing plate and the stacked electrode leads on the surface of the sensing plate are joined to each other by the laser transmission welding.

The busbar assembly according to the present disclosure may further include a protection plate provided behind the sensing plate on the plate seating portion and configured to block a laser beam passing through the sensing plate from further advancing.

The plate seating portion may be formed with an open groove, and the protection plate may be inserted in the open groove.

The open groove and the protection plate may each have a U-shaped cross section.

A fixing projection may be formed on the plate seating portion, and the sensing plate may be formed with a projection insertion hole in which the fixing projection is inserted.

The positive electrode leads and the negative electrode leads may be stacked in plurality, respectively.

The frame may be formed with a plurality of lead slots through which the electrode leads pass.

A battery module according to an embodiment of the present disclosure may include a battery cell stack formed by a plurality of battery cells stacked, and the busbar assembly. In addition, a battery pack may include the battery module.

### [Advantageous Effects]

According to the busbar assembly of the present disclosure, and the battery module and the battery pack including the same, the busbar assembly is configured by stacking a negative electrode lead and a positive electrode lead on a surface of a sensing plate for measuring a voltage, without providing an inter-busbar as in the related art, and then integrally joining the leads with the sensing plate, thereby allowing the structure of the busbar assembly to be simplified, the weight to be reduced, and the manufacturing cost to be decreased. This can lead to reductions in weights and manufacturing costs of the battery module and the battery pack.

In addition, when integrally joining the electrode leads and the sensing plate by laser transmission welding, damage to the devices, including the frame of the busbar assembly, can be prevented during the welding process by preventing further advancement of the laser beam using the protection plate.

### [Description of Drawings]

FIG. 1 is a diagram illustrating a vehicle including a battery pack according to an embodiment of the present disclosure.
FIG. 2 is a diagram illustrating a state in which the battery module according to an embodiment of the present disclosure is accommodated in a pack case.
FIG. 3 is a perspective view of the battery module according to an embodiment of the present disclosure.
FIG. 4 is an exploded perspective view of the battery module according to an embodiment of the present disclosure.
FIG. 5 is a perspective view of a battery cell constituting a battery cell stack.
FIG. 6 is a cross-sectional view illustrating a state in which electrode leads of battery cells are joined to a busbar assembly.
FIG. 7 is an enlarged view of part A of FIG. 6.
FIG. 8 is an exploded perspective view of a busbar assembly according to an embodiment of the present disclosure.
FIG. 9 is an enlarged front view of a plate seating portion illustrated in FIGS. 7 and 8.
FIG. 10 is a perspective view of a sensing plate.
FIG. 11 is a perspective view of a protection plate.
FIG. 12 is a conceptual diagram illustrating a state in which a positive electrode lead and a negative electrode lead are joined to the sensing plate.
FIG. 13 is a conceptual diagram illustrating a state in which a positive electrode lead and a negative electrode lead are joined to both sides of an inter-busbar in the related art.

### [Best Mode]

Hereinafter, a busbar assembly according to various embodiments of the present disclosure, and a battery module and a battery pack including the busbar assembly according to embodiments of the present disclosure will be described in detail with reference to the accompanying drawings.

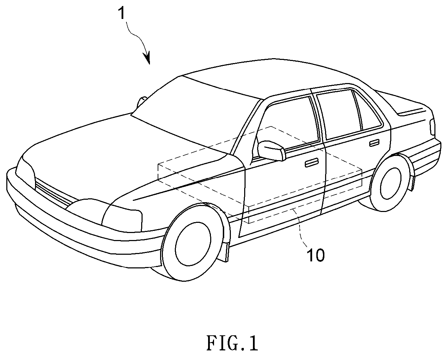

FIG. 1 is a diagram illustrating a vehicle including a battery pack according to an embodiment of the present disclosure.

Referring to FIG. 1, a vehicle 1, such as an electric vehicle or a hybrid electric vehicle, may include one or more battery packs 10 according to an embodiment of the present disclosure. The battery pack 10 can supply electric energy required for various operations of the vehicle 1. In addition, the vehicle 1 may further include various other components, in addition to the battery pack 10. For example, the vehicle 1 may further include a vehicle body, a motor, a control device such as an electronic control unit (ECU), and the like.

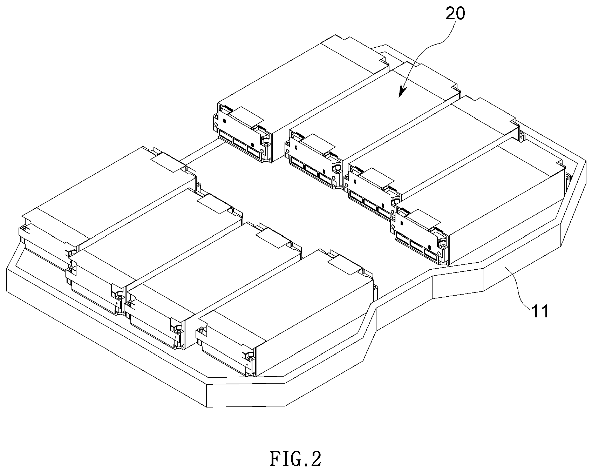

FIG. 2 is a diagram illustrating a state in which the battery module according to an embodiment of the present disclosure is accommodated in a pack case.

Referring to FIG. 2, a plurality of battery modules 20 according to an embodiment of the present disclosure may be provided and arranged in series or in parallel within a pack case 11.

FIG. 2 illustrates an example in which the battery modules 20 are arranged in two rows in parallel. As illustrated in FIG. 2, the battery modules 20 may be arranged in the left and right rows with the same number and spacing, and the battery modules arranged in the left row and the battery modules arranged in the right row may be arranged to face each other.

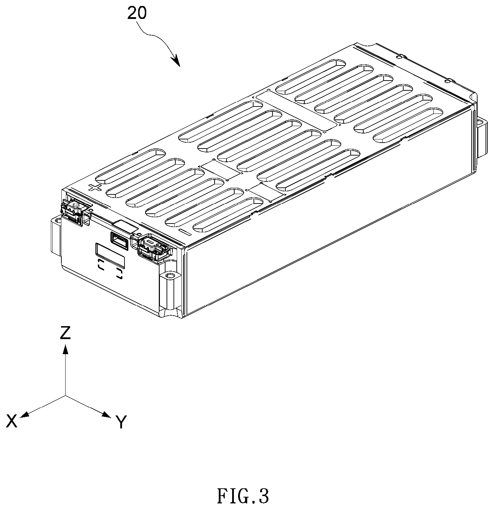

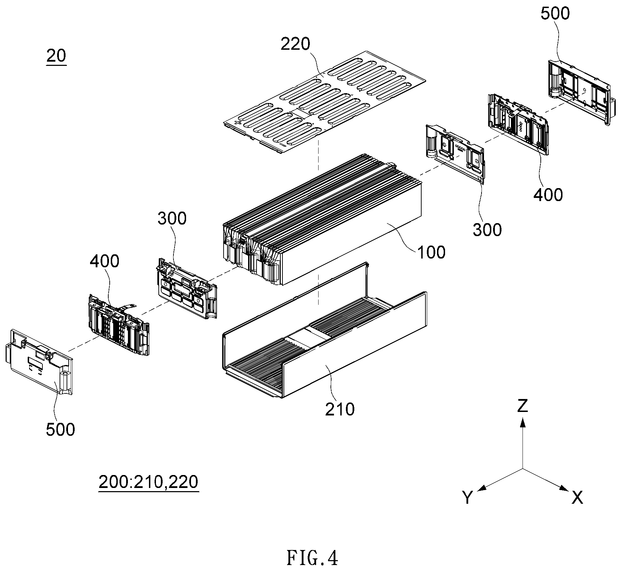

FIG. 3 is a perspective view of a battery module according to an embodiment of the present disclosure, and FIG. 4 is an exploded perspective view of the battery module according to an embodiment of the present disclosure.

Referring to FIGS. 3 and 4, the battery module 20 according to an embodiment of the present disclosure may include a battery cell stack 100, a module case 200, busbar assemblies 300, insulating covers 400, and end plates 500.

The battery cell stack 100 includes a plurality of battery cells that are stacked with their wide surfaces facing each other, and is housed in the module case 200. Each battery cell may be a pouch type.

The module case 200 includes a lower case 210 and an upper case 220, and accommodates the battery cell stack 100 therein. The end plates 500 are coupled to open front and rear surfaces of the module case 200 to cover the front and rear surfaces of the module case 200.

The busbar assemblies 300 may be positioned on both sides of the battery cell stack 100, cover both sides of the battery cell stack 100, electrically connect electrode leads of the battery cells, and guide connection between the battery cell stack 100 and an external device. Note that the busbar assembly 300 may be positioned only on one side of the battery cell stack 110 depending on the direction of the electrode leads of the battery cells constituting the battery cell stack 110.

The insulating cover 400 may include an electrically insulating material and block the electrode leads of the battery cells, terminal busbars, and connectors bonded to the busbar assembly 300 from coming into contact with the end plate 500.

The end plate 500 may protect the battery cell stack 100 and electrical components connected thereto from external physical impact by shielding an open surface of the module case 200.

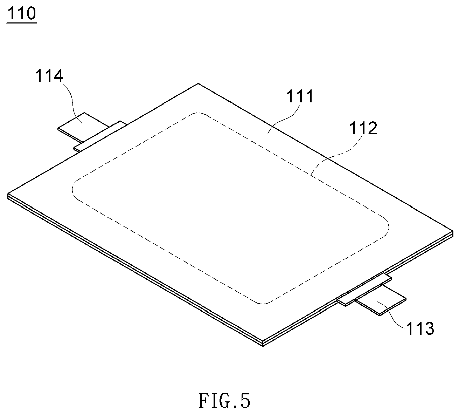

FIG. 5 is a perspective view of a battery cell constituting a battery cell stack.

Referring to FIG. 5, the battery cell 110 includes an electrode assembly 112 housed in a pouch-type cell case 111, and positive electrode and negative electrode leads 113 and 114 protruding from both sides of the cell case 111. The positive electrode lead 113 and the negative electrode lead 114 protrude in opposite directions. Without being limited thereto, the electrode leads 113 and 114 may protrude only from one side of the cell case 111.

The electrode assembly 112 is an assembly of electrodes and a separator, and may be configured in a form in which one or more positive electrode plates and one or more negative electrode plates are arranged with a separator interposed therebetween. Each electrode plate of the electrode assembly may be provided with an electrode tab for connection to an electrode lead. In particular, in the case of a pouch-type secondary battery, one or more electrode tabs may be connected to an electrode lead, and the electrode lead may be interposed between pouch exterior materials such that one end is exposed to the outside, thereby functioning as an electrode terminal. The pouch exterior material may be composed of a laminate sheet including an outer insulating layer, a metal layer, and an inner adhesive layer, and capable of accommodating an electrode assembly and an electrolyte solution and sealing edges by heat fusion.

The electrode leads 113 and 114 may be made of different metal plates for the positive electrode lead 113 and the negative electrode lead 114. For example, the positive electrode lead 113 may be made of an aluminum (AL) plate, and the negative electrode lead 114 may be made of a copper (Cu) plate.

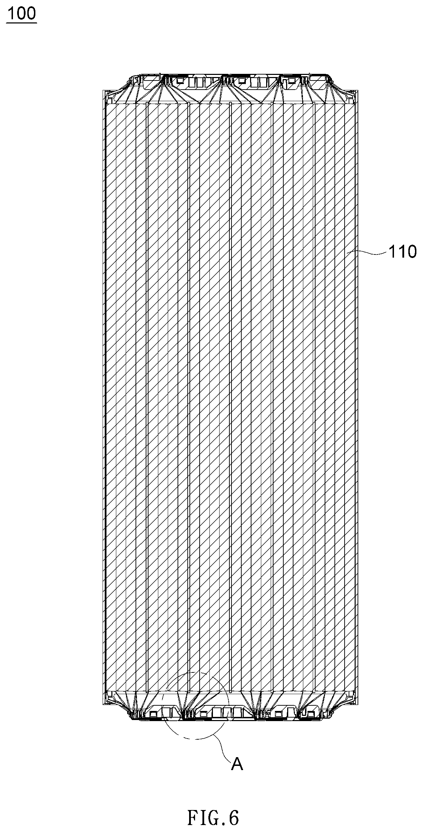

FIG. 6 is a cross-sectional view illustrating a state in which electrode leads of battery cells are joined to a busbar assembly.

As described above, referring to FIG. 6, each battery cell 110 has the positive electrode lead 113 protruding from one side of the cell case 111 and the negative electrode lead 114 protruding from the other side.

The battery cells 110 having such a configuration are connected to each other, thereby allowing current to flow. To this end, the plurality of battery cells 110 may be bundled to form n battery cell bundles.

In the battery cells 110 included in the same bundle, electrode leads having the same polarity may be arranged in the same direction, and between adjacent bundles, electrode leads having different polarities may be arranged.

For example, in FIG. 6, three adjacent battery cells 110 are configured as one bundle, and a total of eight bundles are configured. With reference to the left side of FIG. 6, in the 1st, 3rd, 5th, and 7th bundles, the positive electrode leads may protrude forward, and in the 2nd, 4th, 6th, and 8th bundles adjacent to the above bundles, the negative electrode leads may protrude forward.

The positive electrode leads of the first bundle and the negative electrode leads of the second bundle, which protrude forward, are connected to each other, and the negative electrode leads of the first bundle protruding rearward are connected to a negative electrode terminal busbar of terminal busbars 320 described below.

The positive electrode leads of the second bundle and the negative electrode leads of the third bundle, which protrude rearward, are connected to each other, the positive electrode leads of the third bundle and the negative electrode leads of the fourth bundle, which protrude forward, are connected to each other, the positive electrode leads of the fourth bundle and the negative electrode leads of the fifth bundle, which protrude rearward, are connected to each other, the positive electrode leads of the fifth bundle and the negative electrode leads of the sixth bundle, which protrude forward, are connected to each other, the positive electrode leads of the sixth bundle and the negative electrode leads of the seventh bundle, which protrude rearward, are connected to each other, and the positive electrode leads of the seventh bundle and the negative electrode leads of the eighth bundle, which protrude forward, are connected to each other. The positive electrode leads of the eighth bundle protruding rearward are connected to a positive electrode terminal busbar of the terminal busbars 320 described below.

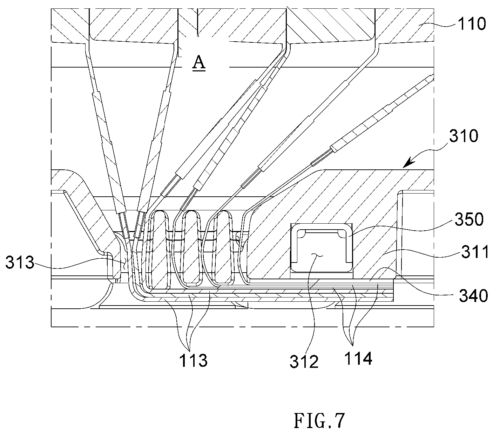

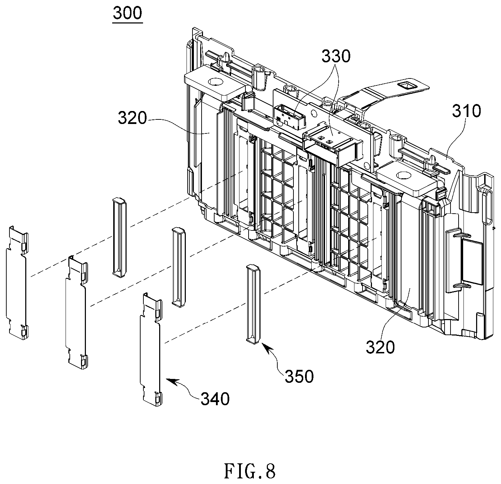

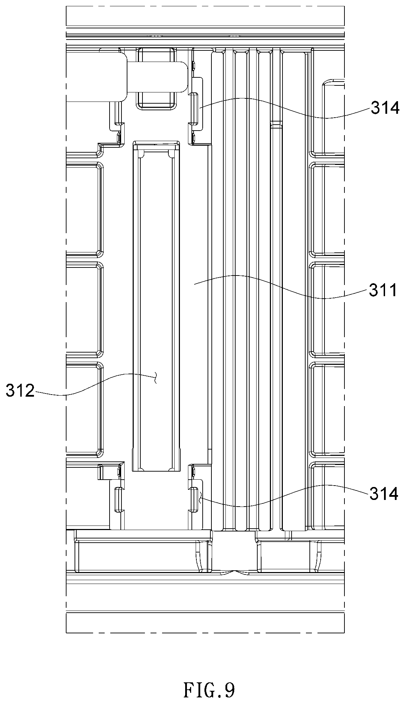

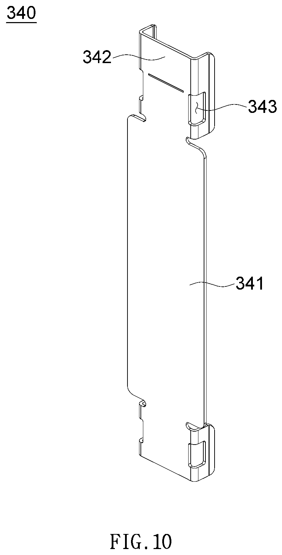

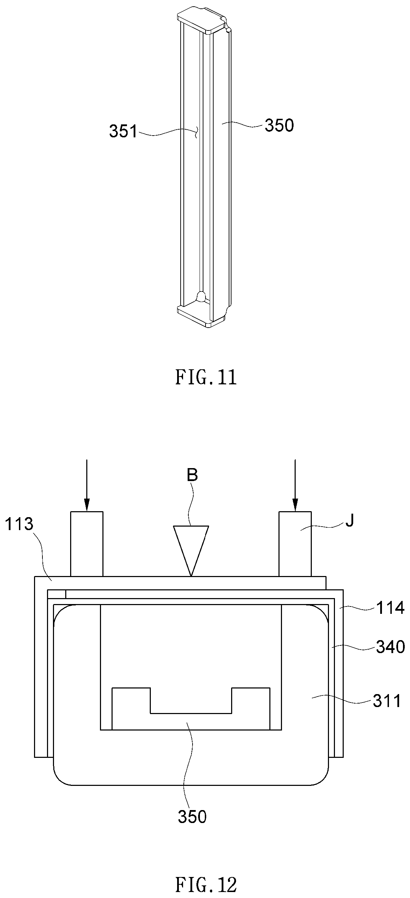

FIG. 7 is an enlarged view of part A of FIG. 6, FIG. 8 is an exploded perspective view of a busbar assembly according to an embodiment of the present disclosure, FIG. 9 is an enlarged front view of a plate seating portion illustrated in FIGS. 7 and 8, FIG. 10 is a perspective view of a sensing plate, and FIG. 11 is a perspective view of a protection plate.

Referring to FIGS. 7-11, the busbar assembly 300 according to an embodiment of the present disclosure includes a frame 310, terminal busbars 320, a connector 330, a sensing plate 340, and a protection plate 350.

The frame 310 covers each of both sides of the battery cell stack 100 and may be made of an insulating material such as resin, and a plate seating portion 311, on a front surface facing the insulating cover 400 and the end plate 500, is formed to seat a sensing plate 340 and a protection plate 350.

The plate seating portion 311 is formed in plurality spaced apart from each other in the left-right direction, and each plate seating portion 311 is formed with an open groove 312 that is open toward the front. The open groove 312 has a U-shaped cross section. The sensing plate 340 is seated on a front surface of the plate seating portion 311 to cover the open groove 312, and the protection plate 350 is inserted and seated in the open groove 312.

Beside the plate seating portion 311 of the frame 310, a plurality of lead slots 313 are formed so that the electrode leads 113 and 114 of the battery cells 110 constituting the battery cell stack 100 can pass therethrough in the front-rear direction.

Hook-shaped fixing projections 314 for fixing the sensing plate 340 are formed to protrude from both lateral sides of upper and lower ends of the plate seating portion 311 in the drawing.

The terminal busbars 320 are mounted on both sides of the frame 310, respectively, and are connected to the battery cell stack 100 and an external device.

A control device capable of controlling charging and discharging of the battery module 20, such as a battery management system (BMS), may be connected to the connector 330.

The sensing plate 340 is made of a metal plate and is seated on the plate seating portion 311. The battery cells 110 may be bundled into a plurality of bundles, and the negative electrode leads 114 of one bundle and the positive electrode leads 113 of an adjacent bundle are joined to the sensing plate 340 in a state of being stacked on the front surface, i.e., the surface, of the sensing plate 340. That is, the plurality of negative electrode leads 114, the plurality of positive electrode leads 113, and the sensing plates 340 may be joined integrally and electrically connected. When current flows through the electrode leads 113 and 114, the sensing plate 340 senses a voltage.

In FIG. 7, three negative electrode leads 114 are first stacked on the front surface of the sensing plate 340, and then three positive electrode leads 113 are stacked on top of them. As will be described below, the sensing plate 340 and the electrode leads 113 and 114 stacked on the front surface thereof are joined by laser transmission welding. For reference, by irradiating a laser beam toward the electrode leads 113 and 114 from the front, the laser beam passes through the electrode leads 113 and 114 and the sensing plate 340 and integrally joins them.

The sensing plate 340 includes a lead joining portion 341 to which the electrode leads 113 and 114 are joined, and fixing portions 342 extending from upper and lower ends of the lead joining portion 341 and fixed to the plate seating portion 311.

The lead joining portion 341 is formed in a flat plate shape and covers the open groove 312 of the plate seating portion 311, and the electrode leads 113 114 are joined to the front surface thereof.

The fixing portion 342 may include a flat portion extending from the lead joining portion 341 and bent portions bent rearward from both sides of the flat portion. Each of the bent portions is formed with a projection insertion hole 343 into which the fixing projection 314 of the plate seating portion 311 is inserted. The sensing plate 340 is fixed to the plate seating portion 311 through the fixing projections 314 and the projection insertion holes 343.

The protection plate 350 is provided in the open groove 312 of the plate seating portion 311, i.e., behind the sensing plate 340, so as to block a laser beam passing through the sensing plate 340 from further advancing, thereby protecting the battery cell 110 including the frame 310 from being affected by the laser beam. As the material of the protection plate 350, various known materials capable of preventing transmission of a laser beam can be used. The protection plate 350 is formed with an open groove 351 that is open toward the front, as with the open groove 312 of the plate seating portion 311, allowing the weight to be reduced. The protection plate 350 may be formed to have a U-shaped cross section.

FIG. 12 is a conceptual diagram illustrating a state in which a positive electrode lead and a negative electrode lead are joined to the sensing plate.

Referring to FIG. 12, in a state in which the protection plate 350 is inserted and seated in the open groove 312 of the plate seating portion 311, the sensing plate 340 is fixed to the front surface, i.e., the surface, of the plate seating portion 311 to cover the open groove 312, the negative electrode leads 114 made of a copper (Cu) plate are first stacked, the positive electrode leads 113 made of an aluminum (Al) plate are then stacked thereon, and the positive electrode leads 113 and the negative electrode leads 114 are pressed against the sensing plate 340 using a welding jig (masking jig, J). Subsequently, a laser beam (B) is irradiated toward the sensing plate 340 from the front of the sensing plate 340 using a laser irradiation device. The irradiated laser beam sequentially passes through the positive electrode leads 113, the negative electrode leads 114, and the sensing plate 340 and welds them integrally.

The energy of the laser beam decreases as it passes through the electrode leads 113 and 114 and the sensing plate 340 in sequence, and the laser beam with reduced energy is blocked from further advancing by the protection plate 350. Even a laser beam with reduced energy may damage the frame 310 if it reaches the frame 310, and if the laser beam further advances toward the battery cell 110 due to the damage to the frame 310, it may adversely affect other devices in addition to the frame 310. The protection plate 350 can prevent such a concern in advance.

Although the busbar assembly according to the embodiments of the present disclosure, and the battery module and the battery pack including the battery module have been described in detail with reference to the accompanying drawings, the present disclosure is not limited to the above-described embodiments and may be implemented in various modified forms within the scope of the claims.

**[Description of Main Reference Numerals of Drawings]**
1: vehicle 10: battery pack
11: pack case 20: battery module
100: battery cell stack 110: battery cell
111: cell case 112: electrode assembly
113: positive electrode lead 114: negative electrode lead
200: module case 210: lower case
220: upper cover 300: busbar assembly
310: frame 311: plate seating portion
312: open groove 313: lead slot
314: fixing projection 320: terminal busbar
330: connector 340: sensing plate
341: lead joining portion 342: fixing portion
343: projection insertion hole 350: protection plate
351: open groove 400: insulating cover
500: end plate

## Claims

1. A busbar assembly comprising:
a frame configured to cover one side or both sides of a battery cell stack, the battery cell stack including battery cells,
wherein electrode leads of the battery cells are stacked on one side of the frame, and
wherein some of the stacked electrode leads are positive electrode leads and others are negative electrode leads.

2. The busbar assembly of claim 1, further comprising a sensing plate seated on a plate seating portion of the frame, the sensing plate having the electrode leads stacked on a surface of the sensing plate, and joined to the electrode leads.

3. The busbar assembly of claim 2, wherein the sensing plate senses a voltage when a current flows through the electrode leads joined to the sensing plate.

4. The busbar assembly of claim 3, wherein the sensing plate includes a metal material.

5. The busbar assembly of claim 3, wherein the stacked electrode leads are joined to each other by laser transmission welding.

6. The busbar assembly of claim 5, wherein the sensing plate and the stacked electrode leads on the surface of the sensing plate are joined to each other by the laser transmission welding.

7. The busbar assembly of claim 6, further comprising a protection plate provided behind the sensing plate on the plate seating portion and configured to block a laser beam passing through the sensing plate from further advancing.

8. The busbar assembly of claim 7, wherein the plate seating portion is formed with an open groove, and the protection plate is inserted in the open groove.

9. The busbar assembly of claim 8, wherein the open groove and the protection plate each have a U-shaped cross section.

10. The busbar assembly of claim 2, wherein a fixing projection is formed on the plate seating portion, and the sensing plate is formed with a projection insertion hole in which the fixing projection is inserted.

11. The busbar assembly of claim 1, wherein the positive electrode leads and the negative electrode leads are stacked in plurality, respectively.

12. The busbar assembly of claim 1, wherein the frame is formed with a plurality of lead slots through which the electrode leads pass.

13. A battery module comprising:
a battery cell stack formed by a plurality of battery cells stacked; and
the busbar assembly of claim 1.

14. A battery pack comprising the battery module of claim 13.
